# EUROPEAN PATENT APPLICATION

(11) **EP 4 502 714 A1**
(43) Date of publication of application: **05.02.2025**
(21) Application number: 23779118.1
(22) Date of filing: 27.02.2023
(51) Int. Cl.: G02C 7/06, G02C 13/00

(54) **EYEGLASS LENS AND DESIGN METHOD FOR EYEGLASS LENS**

(30) Priority: 28.03.2022 JP 2022051126
(71) Applicant: Hoya Lens Thailand Ltd., Pathumthani 12130 (TH)
(72) Inventor: MATSUOKA Shohei, Tokyo 160-8347 (JP)
(74) Representative: Betten & Resch
(86) International application number: PCT/JP2023/006964
(87) International publication number: WO 2023/189088

(57) **Abstract**

At least one of two optical surfaces 2 and 3 respectively located on an object side and an eyeball side has: a base surface 11 configured to cause a light beam incident from the object side to be emitted toward the eyeball side, and to converge at a position A on a retina of an eyeball; and a plurality of defocus surfaces 12 configured to cause a light beam incident from the object side to be emitted toward the eyeball side, and to converge at a position B that is farther away from the object side than the position A is, the base surface 11 is a convex surface, and at least one of the defocus surfaces 12 is a non-concave surface.

## Description

### TECHNICAL FIELD

The present invention relates to a spectacle lens and a design method of the spectacle lens.

### DESCRIPTION OF RELATED ART

As a form of a spectacle lens that achieves a hyperopia reduction function, a spectacle lens is available in which small concave portions (segment surfaces) having a power are added to a surface (base surface) of a routinely prescribed lens.

For example, Patent Document 1 contains descriptions related to a spectacle lens including defocus areas configured to function to cause a light beam to converge at a position that is located farther away from the object side in a traveling direction of light than a position A (i.e., on the back side relative to the position A) on the retina is.

### PRIOR ART DOCUMENT

### PATENT DOCUMENT

Patent Document 1: WO 2020/067028

### SUMMARY

### PROBLEM TO BE SOLVED BY DISCLOSURE

For a spectacle lens having partial concave portions on a surface thereof, light reflected from the surface is condensed by the concave portions, thus possibly causing an inconvenience such as glare to a person viewing the spectacle lens from the outside. Another possible inconvenience is that dust, fat and oil, and the like are likely to accumulate as stains in the partial concave portions on the surface. A further possible inconvenience is that a coating liquid is likely to accumulate in the partial concave portions on a surface during manufacture of the lens, thus possibly compromising the manufacturing quality.

An embodiment of the present invention provides a technique relating to a spectacle lens that can achieve a hyperopia reduction function without causing an inconvenience due to partial concave portions on a surface.

### MEANS FOR SOLVING PROBLEM

A first aspect of the present invention is
a spectacle lens, wherein
at least one of two optical surfaces respectively located on an object side and an eyeball side has:
   a base surface configured to cause a light beam incident from the object side to be emitted toward the eyeball side, and to converge at a position A on a retina of an eyeball; and
   a plurality of defocus surfaces configured to cause a light beam incident from the object side to be emitted toward the eyeball side, and to converge at a position B that is farther away from the obj ect side than the position A is,
   the base surface is a convex surface, and
   at least one of the defocus surfaces is a non-concave surface.

A second aspect according to the present invention is
the spectacle lens according to the first aspect, wherein
a power Pb of the base surface and a defocus power Ps of the defocus surfaces satisfy a relationship Ps < -0.25, and Pb + Ps ≥ 0.

A third aspect of the present invention is
the spectacle lens according to the first or second aspect, wherein
a curvature of the non-concave surface is 0 or more, and a curvature of the convex surface is larger than the curvature of the non-concave surface.

A fourth aspect of the present invention is
the spectacle lens according to any one of the first to third aspects, wherein
the defocus power of the defocus surfaces is configured to be different between a central area located on a center side of the lens, and a peripheral area including at least an area located on an upper side when the lens is worn.

A fifth aspect of the present invention is
the spectacle lens according to fourth aspect, wherein
a power Pb of the base surface and a defocus power Ps of the defocus surfaces in the central area, and a power Pb' of the base surface and a defocus power Ps' of the defocus surfaces in the peripheral area satisfy a relationship Pb' + Ps'> Pb + Ps ≥ 0.

A sixth aspect of the present invention is
the spectacle lens according to any one of the first to fifth aspects, wherein
the base surface and the defocus surfaces are provided on the optical surface located on the object side.

A seventh aspect of the present invention is
a design method of a spectacle lens, the method including
a step of designing at least one of two optical surfaces respectively located on an object side and an eyeball side to have: a base surface configured to cause a light beam incident from the object side to be emitted toward the eyeball side, and to converge at a position A on a retina of an eyeball; and a plurality of defocus surfaces configured to cause a light beam incident from the object side to be emitted toward the eyeball side, and to converge at a position B that is farther away from the obj ect side than the position A is, wherein,
in the step of designing the optical surface, the base surface is designed as a convex surface, and at least one of the defocus surfaces is designed as a non-concave surface.

### ADVANTAGE OF DISCLOSURE

According to an embodiment of the present invention, it is possible to achieve a hyperopia reduction function without causing an inconvenience due to partial concave portions of a surface.

### BRIEF DESCRIPTION OF DRAWINGS

FIG. 1 is a cross-sectional side view showing an exemplary configuration of relevant portions of a spectacle lens according to a first embodiment of the present invention.
FIG. 2 shows plan views showing an exemplary configuration of an object-side surface of the spectacle lens according to the first embodiment of the present invention.
FIG. 3 shows explanatory diagrams schematically illustrating optical characteristics of the spectacle lens according to the first embodiment of the present invention.
FIG. 4 shows explanatory graphs showing a specific example of a surface shape of the spectacle lens according to the first embodiment of the present invention.
FIG. 5 shows explanatory graphs showing a specific example of a surface shape of a spectacle lens as a reference example.
FIG. 6 shows explanatory graphs showing a specific example of a surface shape of a spectacle lens according to a second embodiment of the present invention.

### DETAILED DESCRIPTION OF THE DISCLOSURE

Hereinafter, embodiments of the present invention will be described with reference to the drawings. It should be noted that the following description is merely illustrative, and the present invention is not limited to the aspects that are described as examples.

### <First embodiment>

First, a first embodiment of the present invention will be described.

### (1) Configuration of spectacle lens

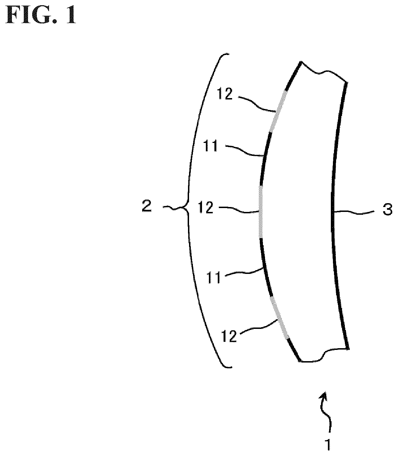

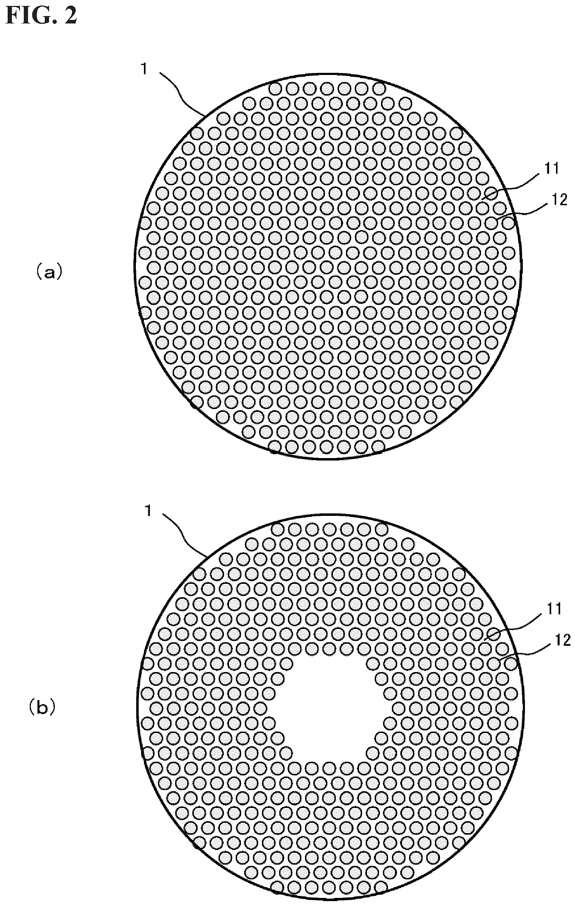

FIG. 1 is a cross-sectional side view showing an exemplary configuration of relevant portions of a spectacle lens according to the present embodiment. FIG. 2 shows plan views showing an exemplary configuration of an object-side surface of the spectacle lens according to the present embodiment.

### (Overall configuration)

As shown in FIG. 1, a spectacle lens 1 according to the present embodiment has an object-side surface 2 and an eyeball-side surface 3 as two optical surfaces. An "object-side surface" is a surface located on the object side when a spectacle including a spectacle lens 1 is worn by a wearer. An "eyeball-side surface" is a surface on the opposite side, or in other words, a surface located on the eyeball side when the spectacle including the spectacle lens 1 is worn by the wearer.

The spectacle lens 1 includes a lens substrate. The lens substrate is made of, for example, a thermosetting resin material such as a thiourethane, an allyl, an acrylic, or an epithio resin material. Note that another resin material that can provide a desired refractivity may be selected as the resin material constituting the lens substrate. Also, the lens substrate may be made of inorganic glass, instead of a resin material.

A coating film is formed on at least one of the object-side surface and the eyeball-side surface of the lens substrate. Examples of the coating film include a hard coating film and an antireflection film (AR film), and another film may be further formed in addition to these films.

The hard coating film is formed using a thermoplastic resin or a UV-curable resin, for example. The hard coating film can be formed using a method involving immersing the lens substrate in a hard coating liquid, spin coating, or the like. Such coating with the hard coating film makes it possible to improve the durability of the spectacle lens 1.

The antireflection film is formed by depositing, for example, an antireflection agent such as ZrO₂, MgF₂, or Al₂O₃ through vacuum deposition. Such coating with the antireflection film makes it possible to improve the visibility of an image seen through the spectacle lens 1.

Note that the surface shape, which will be described later, of a spectacle lens 1 may be realized with the lens substrate constituting the spectacle lens 1, or may be realized with the coating covering the lens substrate.

The spectacle lens 1 according to the present embodiment is a hyperopia reduction lens that achieves a hyperopia reduction function. For this purpose, in the spectacle lens 1, at least one of two optical surfaces including an object-side surface 2 and an eyeball-side surface 3 has a base surface 11 and a plurality of defocus surfaces 12. In the present embodiment, the base surface 11 and the defocus surfaces 12 are provided on the object-side surface 2. That is, the object-side surface 2 is constituted by the base surface 11 and the plurality of defocus surfaces 12. However, the present invention is not limited thereto, and the object-side surface 2 may have, in addition to the base surface 11 and the defocus surfaces 12, a surface other than these surfaces.

### (Base surface)

The base surface 11 is a surface constituting an area portion on the lens that is designed based on a prescribed refractive power of the wearer. By having the base surface 11, the spectacle lens 1 according to the present embodiment is configured to cause a light beam incident on the base surface 11 from the object side to be emitted from the eyeball-side surface 3, and to converge at a predetermined position (position A) on the retina via the pupil of an eyeball of the wearer.

In the present embodiment, the base surface 11 is a surface located on the object side, and is constituted by a convex surface protruding toward the object side. As long as the convex surface constituting the base surface 11 can realize a prescribed refractive power of the wearer and does not impair objects of the present invention, the surface shape of the convex surface is not particularly limited. That is, the surface shape of the base surface 11 may be, for example, a spherical shape, an aspherical shape, a toric shape, or a combination of these shapes. In the present embodiment, a case where the base surface 11 has a spherical shape is described as an example.

Note that the prescribed refractive power to be realized by the base surface 11 may be set to have a weak dioptric power or a strong dioptric power according to the adaptability to the spectacle, the preference, and the like of the wearer. In that case, precisely, the position at which the light beam converges is not directly above the retina, but is a position slightly displaced therefrom. However, in the present specification, this convergence is regarded as convergence on the retina.

### (Defocus surfaces)

Each of the plurality of defocus surfaces 12 is a surface constituting an area portion on the lens that is designed to function as a segment surface having a power different from the power of the base surface 11. By having the defocus surface 12, the spectacle lens 1 according to the present embodiment is configured to cause a light beam incident on the defocus surfaces 12 from the object side to be emitted from the eyeball-side surface 3, and to converge, via the pupil of the eyeball of the wearer, at a position (i.e., a position B on the back side of the retina relative to the position A) that is farther away from the object side than the position A is.

In the present embodiment, the defocus surfaces 12 are surfaces located on the object side similarly to the base surface 11. However, by having a surface shape different from that of the base surface 11, the defocus surfaces 12 are configured to not to allow a light beam to be condensed at the position at which light is condensed by the base surface 11.

The surface shape of each of the defocus surfaces 12 is constituted by a non-concave surface. A "non-concave surface" refers to a surface that is not a concave surface, and corresponds to either a convex surface or a flat surface. That is, the non-concave surface constituting each of the defocus surfaces 12 is a surface having a curvature of 0 or more, assuming that a convexly curved curvature is a plus curvature (i.e., having a positive value).

In the present embodiment, a case where all of the plurality of defocus surfaces 12 are non-concave surfaces is described as a preferred example. However, the present invention is not necessarily limited thereto, and at least one of the plurality of defocus surfaces 12 may be a non-concave surface.

The curvature of the non-concave surface constituting each of the defocus surfaces 12 is set to be larger than the curvature of the convex surface constituting the base surface 11. Due to such a curvature difference, the defocus surface 12 can cause a light beam to converge at a position different from the position at which light is condensed by the base surface 11 (specifically, the position B located on the back side of the retina relative to the position A) even when the eyeball-side surface 3 has the same surface shape in an area thereof facing the base surface 11 and an area thereof facing the defocus surfaces 12.

That is, when Pb (unit: D, diopter) is the power of the base surface 11 and Ps (unit: D, diopter) is the defocus power of the defocus surfaces 12, the power Pb and the defocus power Ps satisfy a relationship Ps < -0.25, and Pb + Ps ≥ 0.

Here, the power Pb of the base surface 11 is a curve of the base surface 11 expressed in units of D (diopter), and satisfies a relationship Pb = 1000/ f radius of curvature ×(refractive index - 1)}.

The defocus power Ps of the defocus surface 12, which is referred to as the "defocus power", rather than being simply referred to as the "power", is a deviation of the curve of the defocus surface 12 from the base surface 11 expressed in units of D (diopter). That is, the defocus power Ps corresponds to a relative difference of the base surface 11 with respect to the defocus surface 12. Therefore, Pb + Ps represents the power of the defocus surface 12.

When the non-concave surface constituting each of the defocus surfaces 12 is a convex surface, it is possible that the surface shape of the defocus surface 12 has a spherical shape, for example. However, the surface shape is not limited thereto, and may be another surface shape. For example, the surface shape may be an aspherical shape having curvatures differing between a central portion and a peripheral portion inside a defocus surface (hereinafter also referred to as "segment surface") in order to add a depth extension effect provided by a spherical aberration, a toroidal shape having curvatures differing depending on the cross section inside the segment surface in order to add an astigmatism suitable to the aberration of the eyeball, a surface shape in which segment surfaces have asymmetrical shapes in order to add a depth extension effect provided by a comma aberration, or a shape formed by combining the above-described shapes in order to combine the above-described aberrations.

In the present embodiment, the plurality of defocus surfaces 12 are each formed, for example, in a circular shape in a plan view as shown in FIG. 2, and each disposed in an island form (i.e., so as to be spaced apart without being adjacent to each other). That is, the defocus surfaces 12 are each disposed discretely (i.e., so as to be separated and scattered without being continuous with each other). Note that although a case where all of the defocus surfaces 12 are disposed in an island form is described here as an example, the present invention is not limited thereto, and the defocus surfaces 12 may be arranged such that outer edges of adjacent areas are connected or in contact with each other. In either case, the form of arrangement of the defocus surfaces 12 preferably has periodicity. This can suppress discomfort such as blurring in a specific direction, thus improving the wearability of the spectacle lens 1. Although the number of defocus surfaces 12 to be arranged is, but is not particularly limited to, 20 or more and 500 or less, for example.

For example, as shown in FIG. 2(a), the plurality of defocus surfaces 12 may be formed throughout the entire lens area of the spectacle lens 1. However, the present invention is not limited thereto. For example, as shown in FIG. 2(b), the defocus surfaces 12 may be formed so as to surround the area of the lens center (geometrical center, optical center, or centering center) of the spectacle lens 1 except for the area in the vicinity of the lens center. Furthermore, the defocus surfaces 12 may be partially formed only in another partial area (e.g., only the area in the vicinity of the lens center area). Alternatively, the defocus surfaces 12 may be formed in a predetermined area except for the vicinity of the center and the vicinity of the outer edge of the spectacle lens 1.

### (2) Optical characteristics of spectacle lens

Next, the optical characteristics of the spectacle lens 1 having the above-described configuration will be described.

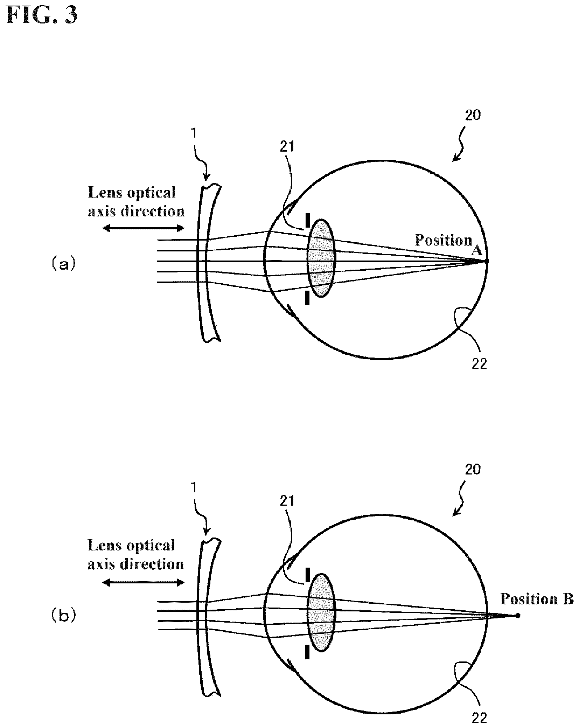

FIG. 3 shows explanatory diagrams schematically illustrating the optical characteristics of the spectacle lens according to the present embodiment.

The spectacle lens 1 having the above-described configuration achieves the following optical characteristics by including the base surface 11 and the plurality of defocus surfaces 12.

For example, as shown in FIG. 3(a), light that has passed through the base surface 11 forms a focal point at a position A on a retina 22 via a pupil 21 of an eyeball 20 of a wearer. That is, the base surface 11 is configured to achieve a refractive power appropriately designed based on the prescription of the wearer so as to form a focal point on the retina 20, which corresponds to the position A.

On the other hand, for example, as shown in FIG. 3(b), light that has passed through the defocus surfaces 12 forms a focal point at a position that is farther away from the object side than the position A is (i.e., a position B located on the back side of the retina relative to the position A) via the pupil 21 of the eyeball 20 of the wearer. That is, the defocus surfaces 12 have a defocus power Ps deviated from the power of the base surface 11 so as to form a focal point at the position B that is defocused from the position A, thus achieving a refractive power different from that of the portion of the base surface 11.

Note that "to form a focal point" as used herein means that light is focused to form an image. However, the formed image need not be necessarily aberration-free, and may have a spherical aberration or an astigmatism.

In this manner, the spectacle lens 1, in principle, causes a light beam to converge at the position A on the retina 22 by the base surface 11, and, on the other hand, in the portions in which the defocus surfaces 12 are arranged, causes a light beam to converge at the position B located on the back side of the retina 22 relative to the position A. By having such optical characteristics, the spectacle lens 1 achieves a function of reducing hyperopia (i.e., a hyperopia reduction function) among refractive errors of the wearer.

### (3) Specific examples of surface shape of spectacle lens

Next, the surface shape of the spectacle lens 1 having the optical characteristics as described above will be described by way of specific examples.

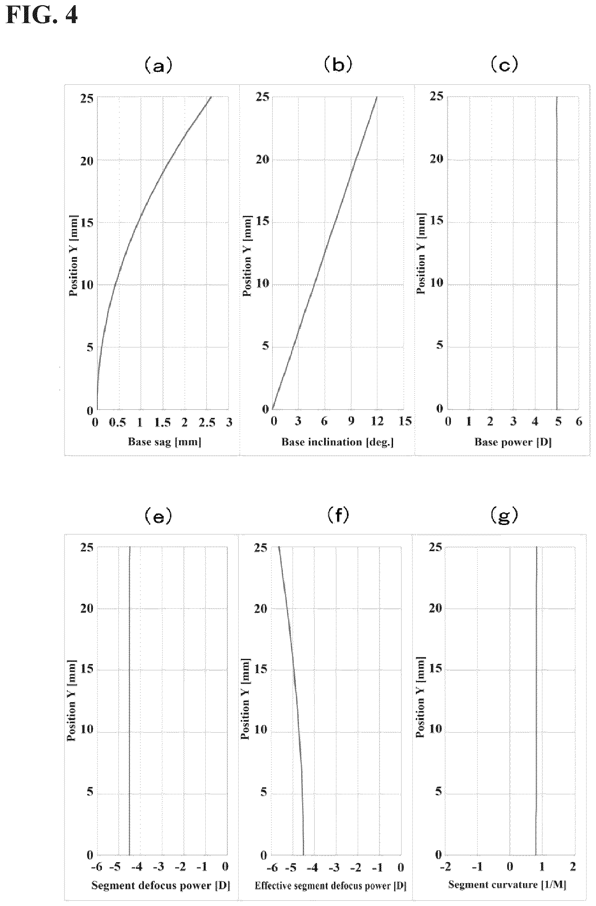

As previously described, the object-side surface 2 of the spectacle lens 1 according to the present embodiment is composed of the base surface 11, which is a convex surface, and the defocus surfaces 12, which are non-concave surfaces. In the following, the surface shape of such an object-side surface 2 will be specifically described with reference to FIG. 4, taking a case where the refractive index of a lens substrate constituting the spectacle lens 1 is n = 1.60 as an example.

FIG. 4 shows explanatory graphs showing a specific example of the surface shape of the spectacle lens 1 according to the present embodiment. Note that in the graphs, a position Y (mm) on the vertical axis indicates a radial position on a lens center of the spectacle lens 1 (separation distance), taking the position of the lens center as "0".

For example, let us consider a case where the surface shape of the base surface 11 is a spherical shape, and the power Pb of the base surface 11 is 5 D (diopter). In that case, as shown in FIG. 4(a), the base surface 11 has a surface shape in which sag amounts (mm) at positions on the lens increase in the direction from the lens center toward the lens periphery. Since the surface shape is a spherical shape, an inclination amount (deg.) of the base surface 11 changes linearly at positions on the lens as shown in FIG. 4(b). As a result, a uniform power Pb of 5 D is obtained throughout the entire base surface 11 as shown in FIG. 4(c).

With respect to the base surface 11, which corresponds to a spherical lens having a base curve of 5 D, a defocus power Ps of -4.5 D (diopter) is set for the defocus surfaces 12, which are segment surfaces, as shown in FIG. 4(e).

Note that taking into account the influence of oblique incidence of light on the spectacle lens 1, an effective segment defocus power, which is set taking such an influence into account, may vary according to the position on the lens as shown in FIG. 4(f).

When such a defocus power Ps is set, the curvature of the non-concave surfaces constituting the defocus surfaces 12 is a plus curvature (i.e., having a positive value) at any position on the lens as shown in FIG. 4(g). When a curvature is plus, a surface having that curvature is a convex surface.

That is, when a defocus power Ps of -4.5 D is set for a defocus surface 12 with respect to the base surface 11 having a power Pb of 5 D, the defocus surfaces 12 maintains a convex surface shape at any position on the lens.

Although the foregoing describes the surface shape of the defocus surfaces 12 using the graphs shown in FIG. 4, the actual defocus surfaces 12 are disposed discretely. Accordingly, it is to be noted that these graphs smoothly represent the tendencies of parameters.

### (4) Design method, and manufacturing method of spectacle lens

The present invention is also applicable to a design method or a manufacturing method of the spectacle lens 1.

For example, a design method of the spectacle lens 1 includes a step of designing optical surfaces of a spectacle lens 1 such that the spectacle lens has: a base surface 11 configured to cause a light beam incident from an object side to be emitted toward an eyeball side, and to converge at a position A located on a retina of an eyeball; and a plurality of defocus surfaces 12 configured to cause a light beam incident from the object side to be emitted toward the eyeball side, and to converge at a position B that is farther away from the obj ect side than the position A is. Also, in the step of designing the optical surfaces, the base surface 11 is designed as a convex surface, and at least one of the defocus surfaces 12 is designed as a non-concave surface.

A manufacturing method of the spectacle lens 1 is substantially the same as above, and the spectacle lens 1 is manufactured through the above-described step. Note that steps other than the step described here may be realized using known techniques.

Through the above-described design method or manufacturing method of the spectacle lens 1, the spectacle lens 1 according to the present embodiment can be obtained.

### (5) Effects according to the present embodiment

According to the present embodiment, one or more of the effects described below can be achieved.

In the present embodiment, the spectacle lens 1 has a base surface 11 and a plurality of defocus surfaces 12, and the base surface 11 causes a light beam to converge at a position A on a retina 22, whereas the defocus surface 12 causes a light beam to converge at a position B located on the back side of the retina 22 relative to the position A. By having such optical characteristics, the spectacle lens 1 achieves a function of reducing hyperopia (i.e., a hyperopia reduction function) among refractive errors of the wearer.

Moreover, in the present embodiment, the defocus surfaces 12 of the spectacle lens 1 are constituted by non-concave surfaces. Accordingly, unlike a spectacle lens having partial concave portions on a surface thereof, reflected light is not condensed by the concave portions even when a hyperopia reduction function is achieved, and therefore the spectacle lens 1 will not cause an inconvenience such as glare to a person viewing the spectacle lens 1 from the outside. In addition, a non-concave surface will not cause such an inconvenience that dust, fat and oil, and the like are likely to accumulate as stains. Furthermore, a non-concave surface will not cause accumulation of a coating liquid in the partial concave portions on the surface during manufacture of the lens. Accordingly, it is possible to eliminate the possibility that the manufacturing quality is compromised.

That is, according to the present embodiment, the defocus surface 12 is constituted by a non-concave surface, and therefore an inconvenience due to partial concave portions on the surface will not be caused, thus making it possible to achieve a hyperopia reduction function.

### <Second embodiment>

Next, a second embodiment of the present invention will be described. Here, the description will focus on differences from the first embodiment.

In the first embodiment, a casa where the surface shape is a spherical shape (see FIG. 4) is described as a specific example of the surface shape of the base surface 11 of the spectacle lens 1. However, as previously described, the surface shape of the base surface 11 may be an aspherical shape, a toric shape, or a combination of these shapes, rather than a spherical shape.

Here, let us consider a case where the surface shape of the base surface 11 is an aspherical shape.

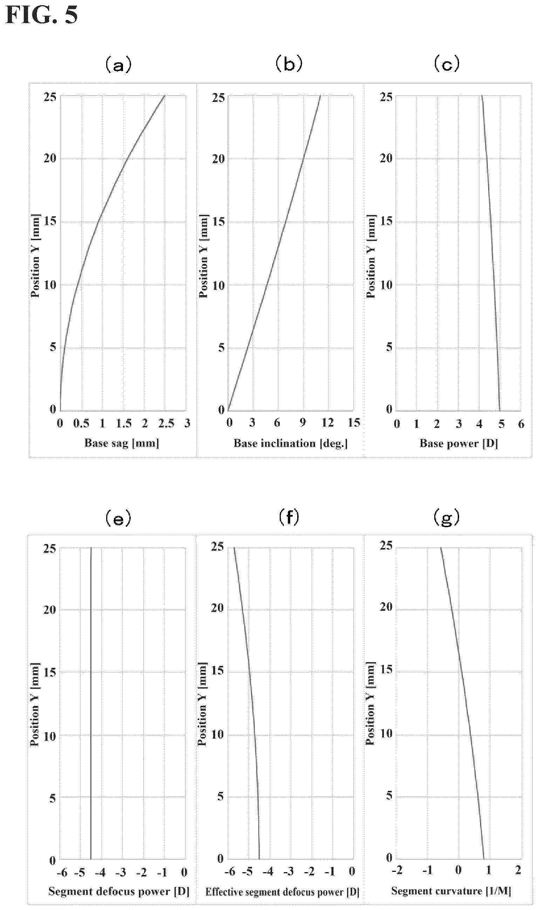

FIG. 5 shows explanatory graphs showing a specific example of the surface shape of a spectacle lens serving as a reference example. Also in the graphs, as in the case of FIG. 4, a position Y (mm) on the vertical axis indicates a position (separation distance) on the lens in the radial direction from a lens center of the spectacle lens 1, with the position of the lens center taken as "0".

For example, when the surface shape of the base surface 11 is an aspherical shape with a loose periphery as shown in FIGS. 5(a) and 5(b), the power Pb of the base surface 11 gradually decreases from 5 D, in the direction from the lens center toward the lens periphery, as shown in FIG. 5(c). Accordingly, when a defocus power Ps of, for example, -4.5 D is set for the defocus surfaces 12, which are segment surfaces, for such a base surface 11 as shown in FIG. 5(e), the curvature of the surface shape of the defocus surfaces 12 also gradually decreases in the direction from the lens center toward the lens periphery, and may change to the minus side from the plus side at some point, as shown in FIG. 5(g). That is, the curvature may be minus on the lens periphery side, and the surface having such a curvature may become a concave surface.

As previously described, various inconveniences may be caused when the surface shape is a concave shape, and such inconveniences are more likely to be caused especially in a lens upper area in which the defocus surfaces 12 face upward. The reason for this is that the lens upper area faces the direction of the sun when the lens is worn, and that stains such a dust and fat and oil are likely to accumulate from the upper side. Therefore, it is preferable that the surface shape of the defocus surface 12 is a non-concave shape particularly in the lens upper area (essentially, an area portion that is located away from the lens center).

For this reason, in the second embodiment of the present invention, the defocus surfaces 12 are configured such that the defocus powers of the defocus surfaces 12 are different between a central area located on the lens center side, and a peripheral area including at least an area located on an upper side when the lens is worn.

Specifically, when Pb is the power of the base surface 11 in the central area, Ps is the defocus power of the defocus surface 12 also in the central area, Pb' is the power of the base surface 11 in the peripheral area, and Ps' is the defocus power of the defocus surfaces 12 also in the peripheral area, the dioptric power Pb and the defocus power Ps in the central area, and the dioptric power Pb' and the defocus power Ps' in the peripheral area satisfy a relationship Pb' + Ps'> Pb + Ps ≥ 0. By satisfying such a relationship, the degree of convexity of the defocus surfaces 12 is increased to be larger in the peripheral area (e.g., an area located on an upper side when the lens is worn) than in the central area.

Particularly, it is preferable that a relationship 0 > Ps' > Ps is satisfied, and that the defocus power of the defocus surface 12 is set to be weaker (to have a smaller value) on a peripheral side (e.g., an upper side when the lens is worn) in the peripheral area. The main reason for this is as follows.

When the negative defocus power Ps' on the peripheral side (e.g., an upper side) is set to be weaker, the dioptric power Pb' on the peripheral side is weaken accordingly. Accordingly, the peripheral area can be constituted by a smooth aspherical surface, thus making it possible to reduce the lens thickness, and suppressing the degree of acuteness of an upper angle formed in the lens upper area.

In addition, when a wearer sees with peripheral vision using the peripheral area, the action of oblique incidence of light tends to increase the effective segment defocus power, which is set taking the influence of oblique incidence of light into account, and this increase can be reduced.

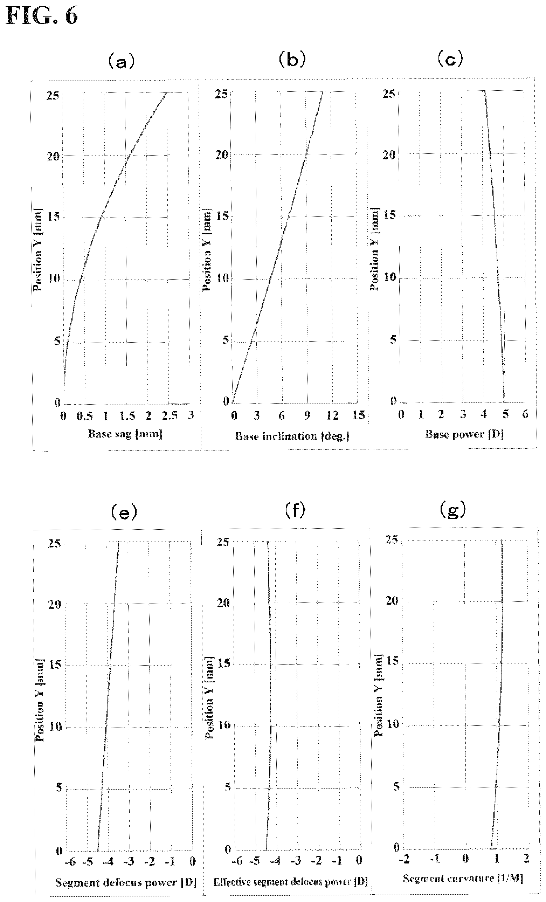

FIG. 6 shows explanatory graphs showing a specific example of the surface shape of the spectacle lens 1 according to the second embodiment. In the graphs, as in the case of FIG. 4 or 5, a position Y (mm) on the vertical axis also indicates a radial position on the lens from a lens center of the spectacle lens 1 (separation distance), taking the position of the lens center as "0".

For example, when the surface shape of the base surface 11 is an aspherical shape with a loose periphery as shown in FIGS. 6(a) and 6(b), the power Pb gradually decreases from 5 D in the direction from the lens center toward the lens periphery, as shown in FIG. 6(c). This is the same as in the case of the reference example shown in FIG. 5.

With respect to such a base surface 11, a defocus power Ps of -4.5 D (diopter) is set for the defocus surfaces 12, which are segment surfaces, for example, at the lens center (i.e., a single point in the central area) as shown in FIG. 6(e), while the defocus power Ps' set for the peripheral area is made weaker (to have a smaller value) than the defocus power Ps.

In this manner, even when the surface shape of the base surface 11 is an aspherical shape, the variation of the effective segment defocus power, which is set taking the influence of oblique incidence of light into account, can be suppressed by setting the defocus power of the defocus surfaces 12 to be weaker in the peripheral area than in the central area, as shown in FIG. 6(f).

Even when the surface shape of the base surface 11 is an aspherical shape, the curvature of the surface shape of the defocus surfaces 12 can be a plus (having a positive value) curvature at any position on the lens by reducing the defocus power in the peripheral area, as shown in FIG. 6(g). That is, the defocus surfaces 12 maintain the convex surface shape at any position on the lens.

Moreover, as can be clearly seen from FIG. 6(g), the curvature of the surface shape of the defocus surfaces 12 has a larger value in the peripheral area. That is, the degree of convexity of the defocus surfaces 12 increases toward the peripheral area (e.g., an area located on an upper side when the lens is worn).

As described thus far, in the present embodiment, the defocus surfaces 12 are configured such that the defocus powers of the defocus surfaces 12 are different between the central area and the peripheral area on the lens. Accordingly, even when the surface shape of the base surface 11 is an aspherical shape, the surface shape of each of the defocus surfaces 12 can have a non-concave shape in a reliable manner. That is, even when the surface shape of the base surface 11 is an aspherical shape, an inconvenience due to partial concave portions on the surface will not be caused, thus making it possible to achieve a hyperopia reduction function.

In the present embodiment, a case where the defocus power of the defocus surfaces 12 gradually changes is described as an example. However, the present invention is not necessarily limited to such a mode of change. That is, as long as the defocus powers are different between the central area and the peripheral area, it is possible to adopt, for example, a mode of change in which the defocus powers change stepwise.

As for the ranges of the central area and the peripheral area, the respective sizes of the ranges, the boundary portions therebetween, and the like need not be clearly specified as long as the defocus powers are different between these areas.

In the present embodiment, the design method and the manufacturing method of the spectacle lens 1 may also be the same as those in the case of the first embodiment described above. In the present embodiment, the defocus powers of the defocus surfaces 12 are made different between the central area and the peripheral area on the lens. However, the surface shapes of those defocus surfaces 12 may be realized with a lens substrate constituting the spectacle lens 1, or may be realized with a coating covering the lens substrate. When the shapes are realized with the coatings, it is possible, for example, to form the lens substrate so as to have defocus surfaces 12 having the same power, and varying the thicknesses or the like of coatings respectively covering the defocus surfaces, thus providing the defocus surfaces 12 with a distribution of powers.

### <Modifications, etc.>

Although embodiments of the present invention have been described above, the technical scope of the present invention is not limited to the above-described illustrative disclosures, and various modification can be made without departing from the gist thereof.

For example, a spectacle lens, wherein
at least one of two optical surfaces respectively located on an object side and an eyeball side has:
a base surface configured to cause a light beam incident from the object side to be emitted toward the eyeball side, and to converge at a position A on a retina of an eyeball; and
a plurality of defocus surfaces configured to cause a light beam incident from the object side to be emitted toward the eyeball side, and to converge at a position B that is farther away from the obj ect side than the position A is,
the base surface is a convex surface, and
at least one of the defocus surfaces is a non-concave surface.

For example, in the above-described embodiments, a case where the surface shapes of all of the plurality of defocus surfaces 12 of the spectacle lens 1 are constituted by non-concave surfaces is described as an example. However, the present invention is not limited thereto. That is, a configuration in which the surface shapes of at least some of the defocus surfaces 12 are constituted by non-concave surfaces belongs to the technical scope of the present invention even when the configuration also includes other defocus surfaces constituted by concave surfaces.

For example, in the above-described embodiments, a case where the non-concave surfaces are convex surfaces is described as specific examples (see FIGS. 4 and 6) of the surface shape of the defocus surfaces 12. However, the present invention is not limited thereto, and the non-concave surfaces also include a flat surface.

Although specific examples (see FIGS. 2(a) and 2(b)) are also described for the planar arrangement of the plurality of defocus surfaces 12, the present invention is not limited thereto. That is, as long as the defocus surfaces 12 are arranged at a plurality of portions on the lens, the arrangement form thereof is not limited to any specific form.

For example, in the above-described embodiments, examples of specific values are given to describe the power Pb of the base surface 11 and the defocus power Ps of the defocus surfaces 12. However, the present invention is not limited thereto, and the values may be set as appropriate.

That is, the base surface 11 may have a shape designed based on prescription information of the wearer. For example, by having a base surface 11 (e.g., an object-side surface), and another surface (e.g., an eyeball-side surface) facing the base surface 11, the spectacle lens 1 can exhibit a prescribed power (a power that has been determined to actually form an image on the retina in a standard wearing state). The shape of the defocus surfaces 12 can also be a shape designed based on prescription information of the wearer. In addition thereto, the design measures specified in the claims are taken, whereby the operations and effects of the present invention can be obtained.

For example, in the above-described embodiments, a case where the base surface 11 and the defocus surfaces 12 are provided on the object-side surface is described as an example. However, the present invention is not limited thereto.

In general, many spectacle lenses have a convex surface on the object side thereof, and therefore the base surface 11 and the defocus surfaces 12 can be provided on that obj ect-side surface. However, when a spectacle lens has a convex surface on an eyeball-side surface, the base surface 11 and the defocus surfaces 12 may be arranged on the eyeball-side surface.

For example, in the above-described embodiments, a case where the spectacle lens 1 constituted by the object-side surface 2 and the eyeball-side surface 3 is described as an example. However, the present invention is not limited thereto, and another configuration (e.g., a spectacle lens having, inside the lens, a multi-surface bonded configuration, including a functional film such as a polarized film) is also included in the technical scope of the present invention.

In the spectacle lens 1, part or all of the powers and the defocus powers of the base surface 11 and the defocus surfaces 12 can be recorded on any surface of the lens through inscription or the like. In addition, at least some of other types of information (e.g., wearer information described below) relating to the lens can also be recorded on the spectacle lens 1 by the same or different means.

The spectacle lens 1 may be managed in association (linked) with wearer information relating to the wearer of the lens. That is, the spectacle lens 1 and the wearer information together may be handled as a lens product, or be subjected to a transaction.

In that case, for example, the wearer information can be recorded on a lens bag in the process of transaction of the lens, or be recorded in a recording medium owned by a dealer, including a spectacle shop, or be provided or transmitted via an electronic communication line in a state in which the lens can be referenced.

The wearer information may contain prescription information (e.g., a spherical power, a cylindrical power, an astigmatic axis, etc.) of the wearer, or may contain wearing parameters (the inter-pupil distance of the wearer, and the forward inclination angle during wearing, the distance between the frame and the cornea, which are determined by the frame used, etc.).

The technical scope of the present invention includes the following spectacle lens.

A spectacle lens, wherein at least one of two optical surfaces respectively located on an object side and an eyeball side has
a base surface configured to cause a light beam incident from the object side to be emitted toward the eyeball side, and to converge at a position A, and
a plurality of defocus surfaces configured to cause a light beam incident from the object side to be emitted toward the eyeball side, and to converge at a position B that is farther away from the obj ect side than the position A is,
the base surface is a convex surface, and
at least one of the defocus surfaces is a non-concave surface.

### DESCRIPTION OF SIGNS AND NUMERALS

- 1: Spectacle lens
- 2: Object-side surface
- 3: Eyeball-side surface
- 11: Base surface
- 12: Defocus surface (segment surface)
- 20: Eyeball
- 21: Pupil
- 22: Retina

## Claims

1. A spectacle lens, wherein
at least one of two optical surfaces respectively located on an object side and an eyeball side has:
a base surface configured to cause a light beam incident from the object side to be emitted toward the eyeball side, and to converge at a position A on a retina of an eyeball; and
a plurality of defocus surfaces configured to cause a light beam incident from the object side to be emitted toward the eyeball side, and to converge at a position B that is farther away from the obj ect side than the position A is,
the base surface is a convex surface, and
at least one of the defocus surfaces is a non-concave surface.

2. The spectacle lens according to claim 1, wherein
a power Pb of the base surface and a defocus power Ps of the defocus surfaces satisfy a relationship Ps < -0.25, and Pb + Ps ≥ 0.

3. The spectacle lens according to claim 1 or 2, wherein
a curvature of the non-concave surface is 0 or more, and a curvature of the convex surface is larger than the curvature of the non-concave surface.

4. The spectacle lens according to any one of claims 1 to 3, wherein
the defocus power of the defocus surfaces is configured to be different between a central area located on a center side of the lens, and a peripheral area including at least an area located on an upper side when the lens is worn.

5. The spectacle lens according to claim 4, wherein
a power Pb of the base surface and a defocus power Ps of the defocus surfaces in the central area, and a power Pb' of the base surface and a defocus power Ps' of the defocus surfaces in the peripheral area satisfy a relationship Pb' + Ps'> Pb + Ps ≥ 0.

6. The spectacle lens according to any one of claims 1 to 5, wherein
the base surface and the defocus surfaces are provided on the optical surface located on the object side.

7. A design method of a spectacle lens, the method comprising
a step of designing at least one of two optical surfaces respectively located on an object side and an eyeball side to have: a base surface configured to cause a light beam incident from the object side to be emitted toward the eyeball side, and to converge at a position A on a retina of an eyeball; and a plurality of defocus surfaces configured to cause a light beam incident from the object side to be emitted toward the eyeball side, and to converge at a position B that is farther away from the obj ect side than the position A is, wherein,
in the step of designing the optical surface, the base surface is designed as a convex surface, and at least one of the defocus surfaces is designed as a non-concave surface.
